# EUROPÄISCHE PATENTSCHRIFT

(11) **EP 0 432 491 B1**
(45) Veröffentlichungstag und Bekanntmachung des Hinweises auf die Patenterteilung: **21.06.1995**
(21) Anmeldenummer: 90121770.3
(22) Anmeldetag: 14.11.1990
(51) Int. Cl.: B32B 27/08, A62D 7/02, A62B 18/08

(54) **Sichtfenster, insbesondere für Hitze-Schutzbekleidung**
Viewing window, especially for thermal protection clothing
Fenêtre de vision spécialement prévue pour combinaison thermoisolante

(30) Priorität: 15.11.1989 DE 8913474 U
(43) Veröffentlichungstag der Anmeldung: 19.06.1991
(73) Patentinhaber: TESIMAX-ALTINGER GMBH, D-75181 Pforzheim (DE)
(72) Erfinder: Altinger, Winfried, W-7530 Pforzheim (DE)
(74) Vertreter: Frank, Gerhard, Dipl.-Phys.

(56) Entgegenhaltungen:
- DE-A- 2 548 904
- GB-A- 1 111 590
- GB-A- 1 461 191
- GB-B- 2 012 668
- US-A- 3 997 464
- WORLD PATENTS INDEX LATEST, Derwent Publications Ltd.,London, GB; AN 84-040303 & JP-A-59003053

## Beschreibung

Die Erfindung betrifft ein Sichtfenster, insbesondere für Hitze-Schutzbekleidung wie z.B. Schutzanzüge oder Schutzhauben, mit einer Scheibe aus außen goldbedampften Polykarbonat.

Das grundsätzliche Problem bei Hitze-Schutzbekleidung besteht darin, Werkstoffe für den Gesichtsbereich als Sichtfenster einzusetzen, die einerseits vollständig durchsichtig sind, andererseits eine hohe Hitzebeständigkeit aufweisen.

Hierbei bieten sich als Ausgangswerkstoffe Glas oder Kunststoff an, die jeweils spezifische Vor- und Nachteile aufweisen:

Die Verwendung von Glas insbesondere in Form einer Verbundglasscheibe als Sichtfenster hat den Vorteil einer sehr hohen Hitzefestigkeit, ist jedoch bruchempfindlich, sehr schwer und wegen erheblicher Fertigungstoleranzen nur in kleinen Abmessungen (etwa 250x150 mm) lieferbar, so daß auch nur ein kleines Sichtfeld möglich ist, was eine mehr oder weniger starke Behinderung darstellt.

Kunststoff für Sichtfenster hat bei einem bekannten derartigen Sichtfenster Einsatz gefunden als außen goldbedampftes Polykarbonat, wobei die Goldschicht als Reflexionsschicht für Wärmestrahlung dient und somit die Temperatur des dahinterliegenden Polykarbonats erniedrigen kann.

Da das Polykarbonat jedoch einen relativ niedrigen Schmelzpunkt aufweist und Beschädigungen der Goldbedampfungsschicht im praktischen Einsatz immer wieder auftreten, führt die dadurch bedingte Erweichung der Scheibe zur absoluten Unbrauchbarkeit des Sichtfensters.

Die Vorteile des Kunststoffes wie beispielsweise geringes Gewicht, leichtere Formbarkeit in entsprechender Formgebung ist daher erkauft mit nur bedingter Sicherheit beim Einsatz durch Verlust der mechanischen Stabilität.

Es ist daher Aufgabe der Erfindung, ein Kunststoff-Sichtfenster so weiterzubilden, daß die beschriebenen Vorteile des Kunststoffaufbaus erhalten bleiben, aber eine wesentliche Verbesserung der Hitze-Schutzwirkung erreicht wird.

Erfindungsgemäß wird diese Aufgabe dadurch gelöst, daß mit der Innenseite der Scheibe über eine PTFE-Folie eine Kunststoff-Innenscheibe flächig verbunden ist.

Erfindugnsgemäß wird also ein Mehrschicht- oder Sandwich-Aufbau des Sichtfensters vorgeschlagen, bei dem die außen goldbedampfte Polykarbonat-Schicht als äußere Scheibe erhalten bleibt, aber als zusätzliche Innenschichten eine weitere Kunststoff-Innenscheibe zum Beispiel Celluloseacetatpropionat eingesetzt wird, die mit einer hitzebeständigen PTFE-Folie ("Teflon") mit der Polykarbonat-Außenscheibe verbunden ist.

Die PTFE-Folie übernimmt hierbei infolge ihrer hohen Temperaturbeständigkeit die eigentliche Hitze-Schutzfunktion gegenüber der Kunststoff-Innenscheibe, so daß auch bei einer eventuellen Zerstörung bzw. Funktionsbeeinträchtigung der Polykarbonat-Außenscheibe ein thermischer Schutz weitgehend erhalten bleibt und auch die mechanische Stabilität des Sichtfensters nicht verloren geht.

Als besonders vorteilhaft hat sich als Kunststoff-Innenscheibe Celluloseacetatproprionat herausgestellt, das mit einem hydrophilem Werkstoff innen beschichtet ist, letzterer dient zum Vermeiden des Beschlagens der Innenscheibe.

Das erfindungsgemäße Sichtfenster besteht daher in einer sinnvollen und sich gegenseitig ergänzenden Zuordnung verschiedener Materialien, die sich in ihrer spezifischen Schutzfunktion und spezifischen mechanischen Eingeschaft gegeneinander ergänzen; Versuche haben gezeigt, daß ein derartiges Sichtfenster einer Außentemperatur (gemessen an der Außenscheibe) von 300 °C über eine Zeitspanne von etwa 7 Minuten ohne weiteres standhält, was etwa der durchschnittlichen Strahlungstemperatur einer Feuerflamme entspricht.

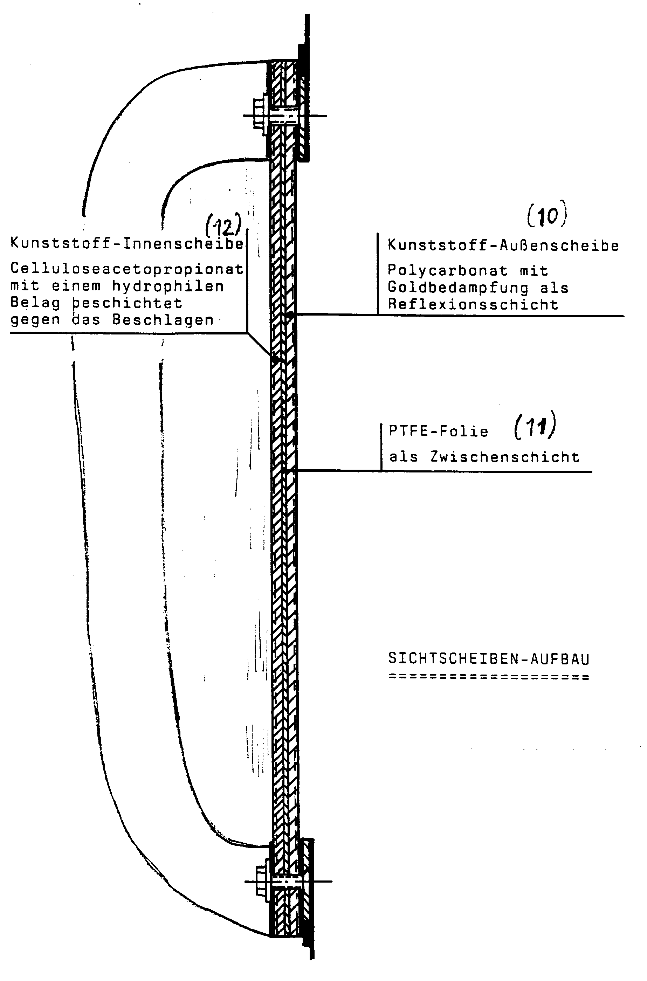

In der Zeichnung ist ein solches Sichtfenster im Querschnitt dargestellt, wobei die Befestigungsbauteile beispielsweise am Schutzanzug oder einer Schutzhaube nicht näher erläutert werden, diese können beispielsweise ausgeführt sein wie beim DE-GM 8716852.9
Bei Einhaltung der im Schutzanspruch 4 angegebenen Schichtdicken der einzelnen Sandwich-Bestandteile werden die Eigenschaften des Kunststoffmaterials als Sichtfenster im Hinblick auf Durchsichtigkeit, Gewichtsersparnis und Hitze-Schutzwirkung optimiert.

## Patentansprüche

1. Sichtfenster für Hitze-Schutzkleidung mit einer Scheibe aus außen goldbedampften Polykarbonat, dadurch gekennzeichnet, daß mit der Innenseite der Scheibe (10) über eine als Hitzeschutz wirkende PTFE-Folie (11) eine Kunststoff-Innenscheibe (12) flächig verbunden ist.

2. Sichtfenster nach Anspruch 1, dadurch gekennzeichnet, daß die Kunststoff-Innenscheibe (12) aus Celluloseacetatproprionat besteht.

3. Sichtfenster nach Anspruch 1, gekennzeichnet durch folgende Schichtdicken:
| | |
|---|---|
| - Polykarbonat-Scheibe (10): | 1 mm |
| - PTFE-Folie (11): | 0,127 mm |
| - Kunststoff-Innenscheibe (12): | 1 mm |

## Claims

1. Viewing window for heat-protective clothing, with a pane made of externally gold-coated polycarbonate, characterised in that the inner side of the pane (10) is connected in sheet form with a plastics inner pane (12) by a PTFE film (11) acting as heat protection.

2. Viewing window according to claim 1, characterised in that the plastics inner pane (12) comprises cellulose acetate propionate.

3. Viewing window according to claim 1, characterised by the following layer thicknesses:
| | |
|---|---|
| - polycarbonate pane (10): | 1 mm |
| - PTFE film (11) : | 0.127 mm |
| -plastics inner pane (12) : | 1 mm |

## Revendications

1. Fenêtre de vision pour vêtement de protection contre la chaleur, comportant une vitre en polycarbonate avec un dépôt extérieur de vapeur d'or,
caractérisée en ce qu'une vitre interne en matière synthétique (12) est liée en surface à la face interne de la vitre (10) par l'intermédiaire d'une feuille en PTFE (11) agissant comme protection contre la chaleur.

2. Fenêtre de vision selon la revendication 1, caractérisée en ce que la vitre interne en matière synthétique (12) est formée d'acétopropionate de cellulose.

3. Fenêtre de vision selon la revendication 1, caractérisée par les épaisseurs de couches suivantes :
| | |
|---|---|
| - vitre en polycarbonate (10) : | 1 mm |
| - feuille en PTFE (11) : | 0,127 mm |
| - vitre interne en matière synthétique (12) : | 1 mm. |
